# EUROPÄISCHE PATENTANMELDUNG

(11) **EP 4 295 671 A1**
(43) Veröffentlichungstag der Anmeldung: **27.12.2023**
(21) Anmeldenummer: 22180324.0
(22) Anmeldetag: 22.06.2022
(51) Int. Cl.: A01G 31/06

(54) **VORRICHTUNG ZUR AUFZUCHT VON PFLANZEN**

(71) Anmelder: Jungheinrich Aktiengesellschaft, 22047 Hamburg (DE)
(72) Erfinder: Rollwa, Volker, 66953 Pirmasens (DE)
(74) Vertreter: Keil & Schaafhausen Patentanwälte PartGmbB

(57) **Zusammenfassung**

Es wird eine Vorrichtung (1) zur Aufzucht von Pflanzen (2) mit einem Pflanzmattenträger (4), der eine Pflanzmatten-Auflagefläche aufweist, und eine Schale (3) angegeben, in der der Pflanzmattenträger (4) angeordnet ist.

Man möchte die Aufzucht von Pflanzen in einem Gewächshaus mit einfachen Mitteln wenig störanfällig gestalten können.

Hierzu ist vorgesehen, dass der Pflanzmattenträger (4) schwimmfähig ist.

## Beschreibung

Die vorliegende Erfindung betrifft eine Vorrichtung zur Aufzucht von Pflanzen mit einem Pflanzmattenträger, der eine Pflanzmatten-Auflagefläche aufweist, und mit einer Schale, in der der Pflanzmattenträger angeordnet ist.

Eine derartige Vorrichtung wird insbesondere verwendet, wenn man Pflanzen in einem Gewächshaus aufziehen möchte. Das Gewächshaus kann dabei auch als Blocklageranordnung ausgebildet sein, bei der die Schalen mit einem gewissen Abstand übereinandergestapelt werden. Die Schalen, ggfs. bis auf die unterste Schale, weisen an ihrer Unterseite dann entsprechende Beleuchtungseinrichtungen auf, um die Pflanzen in der jeweils darunter befindlichen Schale beleuchten zu können.

Um die Aufzucht der Pflanzen mit möglichst wenig Aufwand durchführen zu können, werden vielfach Samen oder Keimlinge auf Pflanzmatten aufgebracht, wo man sie bis zu einem gewissen Stadium vorkeimen lässt. Die sich entwickelnden Pflanzen haben dann schon Wurzeln, die die Pflanzmatten durchdringen. Die Pflanzmatten sind oder werden dann in eine Schale eingebracht, in der sie mit Flüssigkeit und Nährstoffen versorgt werden.

Ein gewisses Problem besteht darin, die Versorgung der Pflanzen in den Pflanzmatten so zu gestalten, dass die Pflanzen nicht zu viel, aber auch nicht zu wenig Flüssigkeit erhalten. Dies ist insbesondere dann schwierig, wenn die Schalen nicht exakt horizontal ausgerichtet werden. In diesem Fall steht die Flüssigkeit "schief" in der Schale, so dass einige Pflanzen zu viel Wasser erhalten und andere Pflanzen zu wenig Wasser erhalten. In jedem Fall ist hier eine sehr genaue Steuerung der Zufuhr der Flüssigkeit erforderlich. Dies macht die Aufzucht von Pflanzen in einem Gewächshaus aufwändig.

Der Erfindung liegt die Aufgabe zugrunde, die Aufzucht von Pflanzen in einem Gewächshaus, insbesondere in einem Blocklager-Gewächshaus, mit einfachen Mitteln wenig störanfällig zu gestalten.

Diese Aufgabe wird dadurch gelöst, dass der Pflanzmattenträger schwimmfähig ist.

Der Pflanzmattenträger kann dann in die Schale eingelegt werden, wobei vor oder nach dem Einlegen des Pflanzmattenträgers in die Schale eine Pflanzmatte auf die Auflagefläche aufgelegt wird. Wenn nun Flüssigkeit in die Schale eingefüllt wird, dann schwimmt der Pflanzmattenträger auf. Dies hat den Vorteil, dass die Pflanzen auf dem Pflanzmattenträger nicht überflutet werden können. Der Pflanzmattenträger sorgt immer für eine korrekte Positionierung der Pflanzen auf dem Pflanzmattenträger in Bezug auf die Oberfläche der Flüssigkeit. Weiterhin hat diese Ausgestaltung den Vorteil, dass auch bei Schalen, die nicht exakt horizontal ausgerichtet sind, alle Pflanzen gleichermaßen mit der Flüssigkeit versorgt werden. Es gibt also keine Bereiche, die trockener oder nasser sind. Vielmehr richtet sich der Pflanzmattenträger automatisch in Bezug auf die Flüssigkeitsoberfläche so aus, dass alle Pflanzen gleichmäßig versorgt werden.

Vorzugsweise weist die Schale mindestens einen Flüssigkeitszufluss und mindestens einen Flüssigkeitsabfluss auf. Man kann dann die Bewässerung der Pflanzen in der Schale automatisieren.

Vorzugsweise weist der Pflanzmattenträger an seiner in Schwerkraftrichtung unten angeordneten Seite mindestens einen Schwimmkörper auf. Der Schwimmkörper sorgt dann für die Schwimmfähigkeit des Pflanzmattenträgers. Durch den Schwimmkörper ist man bei der Wahl des Materials für den Pflanzmattenträger freier. Man kann also auch Materialien verwenden, die ein größeres spezifisches Gewicht als die Flüssigkeit, insbesondere als Wasser, aufweisen. Die Schwimmfähigkeit wird in diesem Fall durch den Schwimmkörper erreicht oder zumindest unterstützt.

Vorzugsweise weist der Pflanzmattenträger mehrere Schwimmkörper auf, die symmetrisch über seine Fläche verteilt angeordnet sind. In diesem Fall ist man nicht mehr darauf angewiesen, die Pflanzmatte symmetrisch auf dem Pflanzmattenträger aufzulegen. Vielmehr sorgen die mehreren Schwimmkörper für eine stabile Lagerung des Pflanzmattenträgers auf der Flüssigkeit, die sich in der Schale befindet.

Vorzugsweise ist der Schwimmkörper einstückig mit dem Pflanzmattenträger ausgebildet. Es besteht damit nicht die Gefahr, dass sich der Schwimmkörper von der Pflanzmatte ablösen kann und die Schwimmfähigkeit verschlechtert wird.

Auch ist bevorzugt, dass der mindestens eine Schwimmkörper durch eine Ausformung des Pflanzmattenträgers gebildet ist. Dies ist eine relativ einfache Möglichkeit, um den Schwimmkörper einstückig mit dem Rest des Pflanzmattenträgers auszubilden.

Auch ist von Vorteil, wenn der Pflanzmattenträger als Tiefziehteil ausgebildet ist. Das Tiefziehteil kann dann aus einem flächigen Material, beispielsweise einem Metallblech oder einer Kunststoffplatte, gebildet werden, indem es in eine Presse eingelegt und umgeformt wird. Dadurch lassen sich auf einfache Weise die gewünschten Geometrien erreichen, insbesondere die Ausformung oder die Ausformungen, die später den oder die Schwimmkörper bilden.

Vorzugsweise weist der Pflanzmattenträger außerhalb des mindestens einen Schwimmkörpers mindestens eine Durchgangsöffnung auf. Durch die Durchgangsöffnung können sich dann die Wurzeln der Pflanzen nach unten erstrecken und die in der Schale befindliche Flüssigkeit erreichen. Es ist nicht mehr notwendig, dass die Wurzeln das Material des Pflanzmattenträgers durchdringen, so dass man wiederum bei der Wahl des Materials für den Pflanzmattenträger eine größere Freiheit hat.

Bevorzugterweise ist eine Durchgangsöffnung in einem Bereich angeordnet, an dessen Ecken jeweils ein Schwimmkörper angeordnet ist. Der Bereich, in dem die Durchgangsöffnung angeordnet ist, wird also gegenüber der Oberfläche der Flüssigkeit in der Schale stabilisiert.

Vorzugsweise weist der Pflanzmattenträger mindestens einen Positionieranschlag als Begrenzung der Pflanzmatten-Auflagefläche auf. Die Pflanzmatte kann dann auf dem Pflanzmattenträger nicht verrutschen. Darüber hinaus erhält eine Bedienungsperson eine Hilfe beim Positionieren der Pflanzmatte auf der Auflagefläche.

Bevorzugterweise weist die Schale einen Pflanzmattenträger-Aufnahmeraum mit einer Länge auf, die einem n-fachen der Länge des Pflanzmattenträgers entspricht, wobei n eine ganze Zahl ist, und/oder die Schale weist einen Pflanzmattenträger-Aufnahmeraum mit einer Breite auf, die einem m-fachen der Breite des Pflanzmattenträgers entspricht, wobei m eine ganze Zahl ist. In diesem Fall ist auch die Position des Pflanzmattenträgers in der Schale festgelegt. Die Breite des Pflanzmattenträgers verläuft parallel zur Breite der Schale und die Länge des Pflanzmattenträgers verläuft parallel zur Länge der Schale. Wenn ein Pflanzmattenträger in die Schale eingelegt wird und der Pflanzmattenträger-Aufnahmeraum mit seiner Länge und Breite den Abmessungen des Pflanzmattenträgers entspricht, dann ist der Pflanzmattenträger zuverlässig gehalten. Wenn die Länge und/oder die Breite einem ganzzahligen Vielfachen der Länge und/oder Breite des Pflanzmattenträgers entspricht, dann kann man eben eine entsprechend größere Anzahl von Pflanzmattenträgern in die Schale einlegen, wobei sich die Pflanzmattenträger dann gegenseitig positionieren und auch hier eine Positionsänderung der Pflanzmattenträger in der Schale praktisch unmöglich ist. Auch hier zeigt sich wieder der Vorteil der Schwimmfähigkeit der Pflanzmattenträger. Die Pflanzmattenträger, die gleich aufgebaut sind und dementsprechend gleich schwimmfähig sind, können sich nicht übereinander schieben, wenn Flüssigkeit in die Schale eingefüllt wird.

Auch ist von Vorteil, dass der Pflanzmattenträger-Aufnahmeraum an mindestens einem Ende einen Anschlag aufweist, der sich in Schwerkraftrichtung nach oben verjüngt. Wenn ein Füllstand der Flüssigkeit in der Schale absinkt, dann gleiten die Pflanzmattenträger in Schwerkraftrichtung nach unten und werden dann durch den sich nach unten verdickenden Anschlag mit geringem Aufwand exakt in ihre Position geführt.

Vorzugsweise ist mindestens ein Anschlag durch eine Verdickung einer Innenseite einer Wand der Schale gebildet. Der Anschlag kann dann einstückig mit der Wand ausgebildet sein, was die Fertigung der Schale erleichtert.

Hierbei ist bevorzugt, dass die Wand eine Außenseite aufweist und sich die Verdickung auf der Außenseite fortsetzt. Der Anschlag stabilisiert dann gleichzeitig die Wand der Schale.

Die Erfindung wird im Folgenden anhand eines bevorzugten Ausführungsbeispiels in Verbindung mit der Zeichnung beschrieben. Hierin zeigen:
- Fig. 1: eine Schale mit mehreren Pflanzmattenträgern,
- Fig. 2: die Schale aus Fig. 1, teilweise im Schnitt,
- Fig. 3: einen Pflanzmattenträger mit Pflanzmatte und Pflanzen,
- Fig. 4: den Pflanzmattenträger von Fig. 3 in der Schale,
- Fig. 5: eine Explosionsdarstellung von Pflanzmattenträger und Pflanzmatte von schräg oben, und
- Fig. 6: eine Explosionsdarstellung von Pflanzmattenträger und Pflanzmatte von schräg unten.

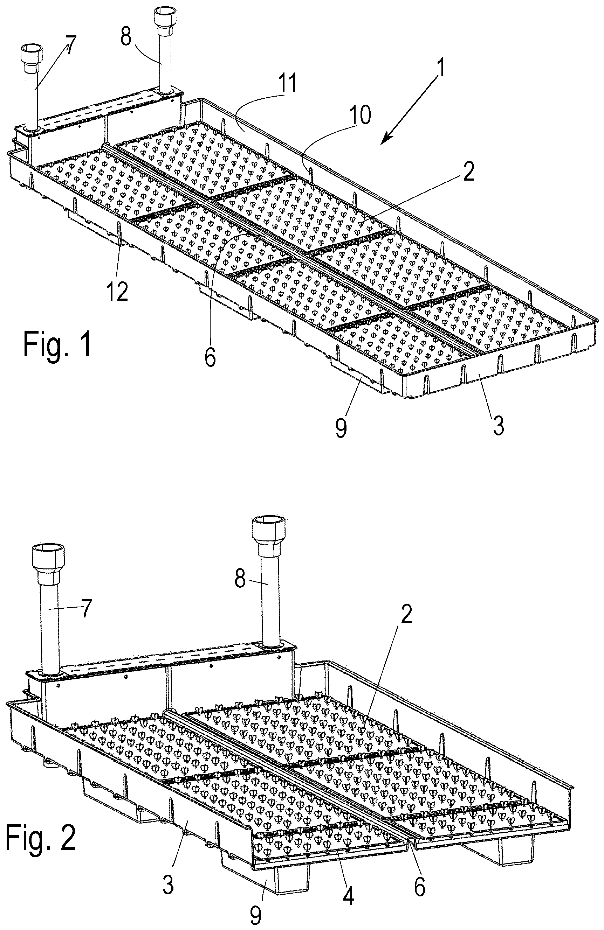

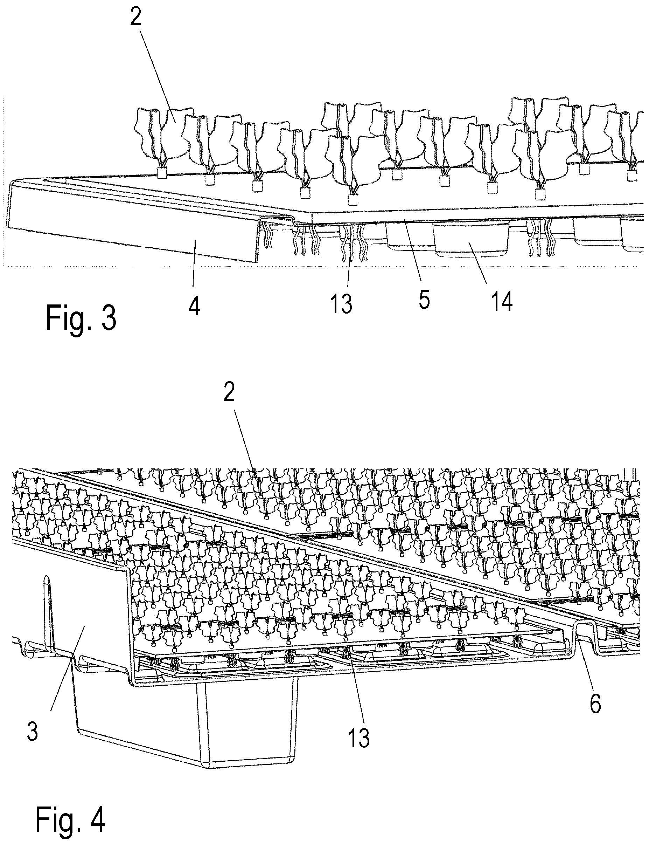

Die Fig. 1 und 2 zeigen eine Vorrichtung 1 zur Aufzucht von Pflanzen 2 mit einer Schale 3. In der Schale 3 sind Pflanzmattenträger 4 (Fig. 3) angeordnet. Auf jedem Pflanzmattenträger 4 befindet sich eine Pflanzmatte 5 mit Pflanzen 2, die auf der Pflanzmatte 5 wachsen sollen.

Die Schale 2 weist einen Flüssigkeitszufluss 7 und einen Flüssigkeitsabfluss 8 auf. Der Flüssigkeitsabfluss 8 ist in Wirklichkeit nach unten gerichtet. Der in den Fig. 1 und 2 dargestellte Flüssigkeitsabfluss ist der Flüssigkeitsabfluss einer im Betrieb oberhalb der dargestellten Schale 3 angeordneten weiteren Schale.

Die Schale 3 weist an ihrer in Schwerkraftrichtung unteren Seite mehrere Kufen 9 und gegebenenfalls nicht dargestellte Beleuchtungskörper auf, mit denen Pflanzen 2 einer Schale 3 beleuchtet werden können, die im Betrieb unterhalb der dargestellten Schale 3 angeordnet sind.

In der in den Fig. 1 und 2 dargestellten Schale 3 sind insgesamt acht Pflanzmattenträger montiert und somit auch acht Pflanzmatten 5 angeordnet. Hierzu weist die Schale 3 einen Aufnahmeraum auf, dessen Länge dem 4-fachen der Länge des Pflanzmattenträgers 4 und dessen Breite dem 2-fachen des Pflanzmattenträgers 4 entspricht. Die Länge ist dabei ein Abstand zwischen Anschlägen 10 an einer Längsseite der Schale 3 und die Länge ist der Abstand zwischen entsprechenden Anschlägen an den Schmalseiten der Schale 3. Die Anschläge 10 sind als Verdickungen einer Wand 11 der Schale 3 ausgebildet. Diese Verdickungen setzen sich auf der Außenseite der Schale 3 fort, wie durch das Bezugszeichen 12 angedeutet ist.

Die Schale 3 kann, wie beispielsweise in den Fig. 2 und 4 dargestellt, einen Versteifungsvorsprung 6 aufweisen, der sich, wie dargestellt, über die Länge der Schale 3 erstreckt. Entsprechende Versteifungsvorsprünge 6 können auch in Richtung der Breite vorgesehen sein.

Die Länge und/oder die Breite der Versteifungsvorsprünge 6 sind bei der Bemessung des Aufnahmeraums als Vielfaches der Breite und/oder Länge der Pflanzmattenträger 4 natürlich zu berücksichtigen.

Der Pflanzmattenträger 4 ist schwimmfähig. Wenn also eine Flüssigkeit in die Schale 3 eingefüllt wird, dann schwimmt der Pflanzmattenträger 4 auf, bevor die Flüssigkeit die Pflanzmatte 5 erreicht. Die Pflanzen weisen allerdings Wurzeln 13 auf, die den Pflanzmattenträger 4 durchragen und somit in die Flüssigkeit gelangen können. Der Pflanzmattenträger 4 schwimmt so weit auf, dass zwischen der Pflanzmatte 5 und der Flüssigkeit immer ein gewisser Abstand vorhanden ist, so dass die Wurzeln 13 auch mit Sauerstoff aus der Luft versorgt werden können.

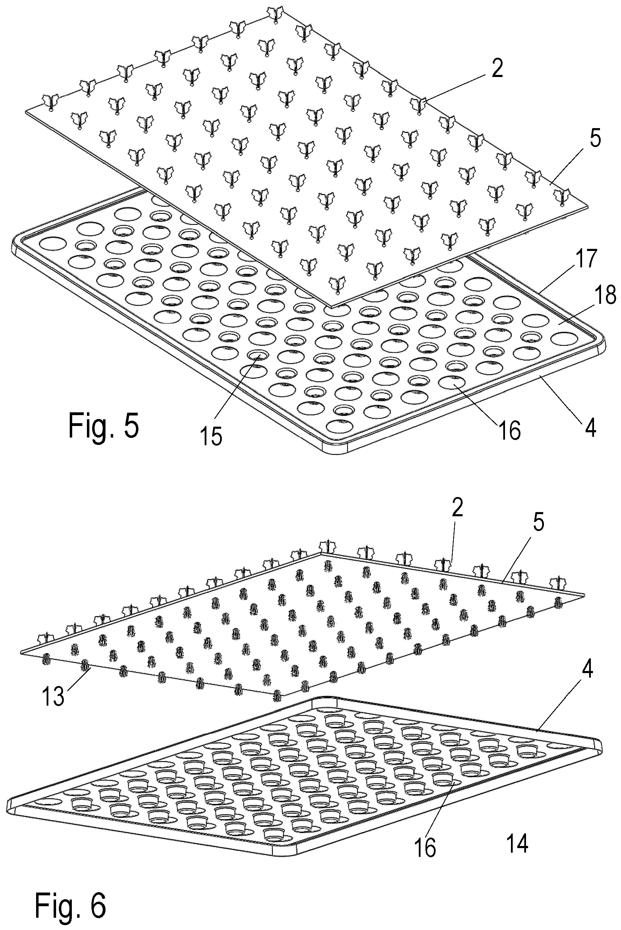

Die Schwimmfähigkeit des Pflanzmattenträgers 4 wird insbesondere durch Schwimmkörper 14 bewirkt, die an der Unterseite (in Schwerkraftrichtung) des Pflanzmattenträgers 4 angeordnet sind. Wie man insbesondere in Fig. 6 erkennen kann, weist der Pflanzmattenträger 4 eine Vielzahl von Schwimmkörpern 14 auf, die symmetrisch über die Fläche des Pflanzmattenträgers 4 verteilt angeordnet sind.

Die Schwimmkörper 14 sind einstückig mit dem Pflanzmattenträger 4 ausgebildet, insbesondere durch eine Ausformung des Pflanzmattenträgers 4. Die Ausformungen, die die Schwimmkörper 14 bilden, sind topfartig ausgebildet, d.h. sie bilden auch eine Vertiefung 15 (Fig. 5) an der Oberseite des Pflanzmattenträgers 4. Der Pflanzmattenträger 4 lässt sich auf einfache Weise als Tiefziehteil ausbilden, beispielsweise aus einem Metallblech oder aus einer Kunststoffplatte.

Wie man insbesondere in den Fig. 5 und 6 erkennen kann, weist der Pflanzmattenträger eine Vielzahl von Durchgangsöffnungen 16 auf, durch die die Wurzeln 13 in die Flüssigkeit unterhalb des Pflanzmattenträgers 4 ragen können. Eine Durchgangsöffnung 16 ist in den meisten Fällen in einem Bereich angeordnet, an dessen Enden jeweils ein Schwimmkörper 14 angeordnet ist. Dies gilt allerdings nicht in den Ecken und den Rändern des Pflanzmattenträgers 4.

Der Pflanzmattenträger 4 weist einen umlaufenden Positionieranschlag 17 an seinem Rand auf. Der Positionieranschlag 17 dient als Begrenzung einer Pflanzmatten-Auflagefläche 18, auf den die Pflanzmatte 5 aufgelegt wird. Die Pflanzmatten-Auflagefläche 18 hat die gleiche Größe, wie die Pflanzmatte 5. Damit bildet der Positionieranschlag 17 eine Positionierhilfe beim Auflegen der Pflanzmatte 5 auf dem Pflanzmattenträger 4.

Wenn Pflanzen 2 in der Vorrichtung 1 wachsen sollen, dann werden in einem ersten Schritt innerhalb oder außerhalb der Vorrichtung 1 Samen oder Keimlinge auf die Pflanzmatte 5 aufgebracht und dort zum Keimen gebracht. Die Bestückung der Pflanzmatte 5 mit dem Samen oder Keimlingen kann automatisch erfolgen, und zwar in einem Raster, das den Durchgangsöffnungen 16 entspricht. Die Pflanzmatten 5 mit den vorgekeimten Pflanzen 2 werden dann auf die Pflanzmattenträger 4 aufgebracht und die Pflanzmattenträger 4 werden in die Schale 3 eingelegt. Die Schalen 3 können dann in das Gewächshaus verbracht werden und, wenn es sich bei dem Gewächshaus um eine Blocklageranordnung handelt, gestapelt werden.

Durch die oben erwähnten Beleuchtungseinrichtungen wird das zum Wachsen erforderliche Licht bereitgestellt. Über den Flüssigkeitszufluss 7 und den Flüssigkeitsabfluss 8 wird Flüssigkeit mit entsprechenden Nährstoffen zu- und abgeführt. Dabei muss man an die Steuerung der Flüssigkeitshöhe in der Schale 3 keine besonders großen Anforderungen stellen, da die Pflanzmattenträger 4 aufschwimmen. Wenn genügend Flüssigkeit in die Schale 3 eingefüllt wird, kann es nicht vorkommen, dass die Flüssigkeit die Pflanzmatten 5 überflutet und die Pflanzmatten 5 von den Pflanzmattenträgern 4 wegschwemmt. Die Wurzeln 13 können jedoch in die Flüssigkeit hineinragen und dort Flüssigkeit und Nährstoffe aufnehmen.

Wenn die Flüssigkeit aus der Schale abgelassen wird, dann setzen sich die Pflanzmattenträger 4 wieder auf dem Boden der Schale 3 auf. Auch dann, wenn die Schale 3 nicht genau horizontal ausgerichtet ist, besteht kein Problem, dass einige Pflanzen überversorgt und andere Pflanzen unterversorgt werden. Durch die Schwimmfähigkeit des Pflanzmattenträgers richtet sich der Pflanzmattenträger 4 mit seiner Pflanzmatten-Auflagefläche 18 genau parallel zur Oberfläche der Flüssigkeit aus, so dass die auf einem Pflanzmattenträger 4 befindlichen Pflanzen 2 alle die gleichen Bedingungen haben.

Die Pflanzmatten können beispielsweise aus einem Vlies gebildet sein. Der Pflanzmattenträger 4 ist wiederverwendbar.

## Patentansprüche

1. Vorrichtung (1) zur Aufzucht von Pflanzen (2) mit einem Pflanzmattenträger (4), der eine Pflanzmatten-Auflagefläche (18) aufweist, und mit einer Schale (3), in der der Pflanzmattenträger (4) angeordnet ist, **dadurch gekennzeichnet, dass** der Pflanzmattenträger (4) schwimmfähig ist, wobei der Pflanzmattenträger (4) an seiner in Schwerkraftrichtung unten angeordneten Seite mindestens einen Schwimmkörper (14) aufweist.

2. Vorrichtung nach Anspruch 1, **dadurch gekennzeichnet, dass** die Schale (3) mindestens einen Flüssigkeitszufluss (7) und mindestens einen Flüssigkeitsabfluss aufweist.

3. Vorrichtung nach Anspruch 1 oder 2, **dadurch gekennzeichnet, dass** der Pflanzmattenträger (4) mehrere Schwimmkörper (14) aufweist, die symmetrisch über seine Fläche verteilt angeordnet sind.

4. Vorrichtung nach einem der Ansprüche 1 bis 3, **dadurch gekennzeichnet, dass** der mindestens eine Schwimmkörper (14) einstückig mit dem Pflanzmattenträger (4) ausgebildet ist.

5. Vorrichtung nach Anspruch 4, **dadurch gekennzeichnet, dass** der mindestens eine Schwimmkörper (14) durch eine Ausformung des Pflanzmattenträgers (4) gebildet ist.

6. Vorrichtung nach Anspruch 5, **dadurch gekennzeichnet, dass** die Ausformung topfartig ausgebildet ist.

7. Vorrichtung nach einem der Ansprüche 1 bis 4, **dadurch gekennzeichnet, dass** der Pflanzmattenträger (4) als Tiefziehteil ausgebildet ist.

8. Vorrichtung nach einem der Ansprüche 1 bis 7, **dadurch gekennzeichnet, dass** der Pflanzmattenträger (4) außerhalb des mindestens einen Schwimmkörpers (14) mindestens eine Durchgangsöffnung (16) aufweist.

9. Vorrichtung nach Anspruch 8, **dadurch gekennzeichnet, dass** eine Durchgangsöffnung (16) in einem Bereich angeordnet ist, an dessen Ecken jeweils ein Schwimmkörper (14) angeordnet ist.

10. Vorrichtung nach einem der Ansprüche 1 bis 9, **dadurch gekennzeichnet, dass** der Pflanzmattenträger (4) mindestens einen Positionieranschlag (17) als Begrenzung der Pflanzmatten-Auflagefläche (18) aufweist.

11. Vorrichtung nach einem der Ansprüche 1 bis 10, **dadurch gekennzeichnet, dass** die Schale (3) einen Pflanzmattenträger-Aufnahmeraum mit einer Länge aufweist, die einem n-fachen der Länge des Pflanzmattenträgers (4) entspricht, wobei n eine ganze Zahl ist, und/oder die Schale (3) einen Pflanzmattenträger-Aufnahmeraum mit einer Breite aufweist, die einem m-fachen der Breite des Pflanzmattenträgers (4) entspricht, wobei m eine ganze Zahl ist.

12. Vorrichtung nach Anspruch 11, **dadurch gekennzeichnet, dass** der Pflanzmattenträger-Aufnahmeraum an mindestens einem Ende einen Anschlag (10) aufweist, der sich in Schwerkraftrichtung nach oben verjüngt.

13. Vorrichtung nach Anspruch 12, **dadurch gekennzeichnet, dass** mindestens ein Anschlag (10) durch eine Verdickung einer Innenseite einer Wand (11) der Schale (3) gebildet ist.

14. Vorrichtung nach Anspruch 13, **dadurch gekennzeichnet, dass** die Wand (11) eine Außenseite (6) aufweist und sich die Verdickung (12) auf der Außenseite (6) fortsetzt.
